# EUROPEAN PATENT SPECIFICATION

(11) **EP 1 239 130 B1**
(45) Date of publication and mention of the grant of the patent: **28.02.2007**
(21) Application number: 02100238.1
(22) Date of filing: 08.03.2002
(51) Int. Cl.: F02B 69/06

(54) **DUAL-MODE ENGINE WITH CONTROLLED AUTO-IGNITION**
Dual-Modus-Brennkraftmaschine mit gesteuerter Selbstzündung
Moteur à double mode avec auto-allumage réglé

(30) Priority: 08.03.2001 GB 0105724
(43) Date of publication of application: 11.09.2002
(73) Proprietor: Ford Global Technologies, LLC, Dearborn, MI 48126 (US)
(72) Inventor: MA, Thomas, Tsoi-Hei, CM3 5YL, South Woodham Ferrers (GB)
(74) Representative: Messulam, Alec Moses

(56) References cited:
- EP-A- 1 048 833
- GB-A- 2 313 623
- US-A- 4 392 459
- US-A- 5 158 044
- US-A- 5 517 951
- US-A- 5 875 743
- PATENT ABSTRACTS OF JAPAN vol. 2000, no. 14, 5 March 2001 (2001-03-05) & JP 2000 314318 A (NISSAN MOTOR CO LTD), 14 November 2000 (2000-11-14)
- PATENT ABSTRACTS OF JAPAN vol. 1998, no. 13, 30 November 1998 (1998-11-30) & JP 10 227226 A (DAIHATSU MOTOR CO LTD), 25 August 1998 (1998-08-25)

## Description

The present invention relates to an internal combustion engine having exhaust and intake poppet valves whose opening and closing events relative to the rotation of the engine crankshaft are selectable such that the engine may be switched between a two-stroke mode and a four-stroke mode.

Two-stroke engines have certain advantages over four-stroke engines in that, for a given cylinder displacement, they are capable of producing higher torque, especially at low engine speeds. However, they also have many disadvantages which, despite many efforts to overcome them, have precluded their use in motor vehicles. Among these disadvantages are poor durability and poor emissions. In particular, combustion stability and HC emissions are poor under low load condition while, during high load conditions, the NOx emissions cannot be reduced by a three-way catalytic converter because the exhaust gases of a two-stroke engine inevitably contain excess air.

With a view to obtaining the advantages of both types of engine, there have already been proposed engines with poppet valves that are switchable between two-stroke and four-stroke operation. US 5,158,044 shows how this may be achieved using two different camshafts with switchable tappets and US 5,517,951 aims to achieve the same objective with a camless engine, where the poppet valves are opened and closed hydraulically or electromagnetically. In both these cases, the engines are constructed as conventional four stroke engines, with well proven durability, that have a two-stroke mode achieved by opening and closing the poppet valves once per crankshaft revolution instead of once in every two crankshaft revolutions. In both these proposals, as well as similar proposals to design dual-mode engines, the intention has been to operate in four-stroke mode under low load for better combustion stability and in two-stroke mode under high load for better torque. The prior art dual-mode engines did not address the problem of exhaust emissions. In particular, the inability to reduce NOx emissions when operating at high load in two-stroke mode, even with the use of state of the art after-treatment technology, prevents such engines from complying with current legislation.

According to the present invention, there is provided an internal combustion engine having exhaust and intake poppet valves having opening and closing events relative to the rotation of the engine crankshaft that are selectable such that the engine may be switched between a two-stroke mode and a four-stroke mode, wherein control means are provided to operate the engine in four-stroke mode under high load and starting operating conditions and in a two-stroke controlled auto-ignition mode under low and medium load operating conditions.

The present invention is based on the acceptance of the fact that an engine must operate in four-stroke mode under high load conditions if full advantage is to be taken of the after-treatment system. The invention however recognises that, contrary to previous teaching, there is an advantage to be gained from operating in two-stroke mode under low and medium loads provided that controlled auto-ignition is relied upon to achieve even running and very low NOx emissions that dispense with the need for exhaust after-treatment when operating in this mode.

Controlled auto-ignition is now a well recognised phenomenon which will be described only briefly. During auto-ignition, instead of a flame spreading progressively through the combustion chamber, the temperature and pressure conditions created in the combustion chamber are such that spontaneous combustion is triggered and the charge burns rapidly with uniform temperature. This mode of operation is characterised by low fuel consumption, very smooth running and very low NOx emissions.

The conditions that favour controlled auto-ignition are the presence of a high proportion of hot residual gases trapped in the combustion chamber to heat up the combustible charge in the next operating cycle. The invention recognises that two-stroke operation is better suited for the controlled auto-ignition mode because the scavenging process that occurs under low and medium load operation tends naturally to trap a high proportion of residual charge.

Controlled auto-ignition can occur naturally over a limited range in an engine operating is two-stroke mode but the temperature and pressure conditions border on being sufficient to support controlled auto-ignition over a much wider load range.

In a preferred embodiment of the invention, the range over which controlled auto-ignition occurs reliably in the two-stroke mode of operation is extended by providing means for increasing the exhaust back pressure. By increasing the back pressure, the proportion of residual gases that is retained in the combustion chamber during scavenging is increased and its temperature is increased, thereby favouring auto-ignition.

In a two-stroke engine with poppet valves arranged at the top of the combustion chamber, the movement of the piston does not of itself act to draw in the fresh charge nor to expel the burnt gases. It is necessary instead to provide some means for pressurising the intake charge both to force the charge into the cylinder and to displace the burnt gases into the exhaust port.

In most two-stroke engines, this pressurising of the intake charge is achieved by compression in the crankcase but this approach cannot be used in an engine that also operates as a four-stroke. Instead a blower or supercharger is required.

In the preferred embodiment of the invention, the required increase in back-pressure and the pressurising of the intake charge are conveniently achieved by using an exhaust turbocharger. Such a turbocharger will differ in design from turbochargers used conventionally for increasing power output and turbo blowers used conventionally for scavenging because its maximum turbine speeds and boost pressures should be reached while the engine is operating under medium loads. Because it is designed to produce the desired pressures under low and medium loads, steps must be taken to disable the turbocharger, or to modify its characteristics, in order to protect it from damage when the engine is operating under high load in four-stroke mode. To this end, the turbocharger may either have means enabling it to be bypassed or it may have variable geometry on the side of its turbine and/or impeller.

In the preferred embodiment of the invention, the turbocharger will thus act during the scavenging periods when the engine is operating in the two-stroke mode, to increase the exhaust back pressure sufficiently while the intake charge pressure is increased so as to permit only a limited quantity of exhaust gases to be scavenged from the engine cylinder, the limited quantity being sufficiently low to maintain within the cylinder a mass ratio of retained exhaust gases to fresh intake charge that will support controlled auto-ignition.

The dual-mode engine may itself adopt any of the designs to be found in the prior art mentioned above as the invention does not reside in the manner in which the valves are made to open and close with the required events. Hence any of mechanically switched cams and/or followers, hydraulic and electromagnetic valve actuators may be used.

The manner in which fuel is added to the charge, i.e. whether it is premixed, port injected or in-cylinder injected is also not material to the invention.

The invention is also not dependent on the manner in which ignition occurs outside the controlled auto-ignition range so that the engine may either be spark ignited or compression ignited (using diesel fuel).

The invention will now be described further, by way of example, with reference to the accompanying drawings, in which:
Figure 1 is a schematic representation of a dual-mode engine having an exhaust turbocharger with a wastegate,
Figure 2 is a schematic representation of a variable geometry turbocharger, and
Figures 3a to 3d are valve timing diagram for different cylinders of a four-cylinder dual-mode engine.

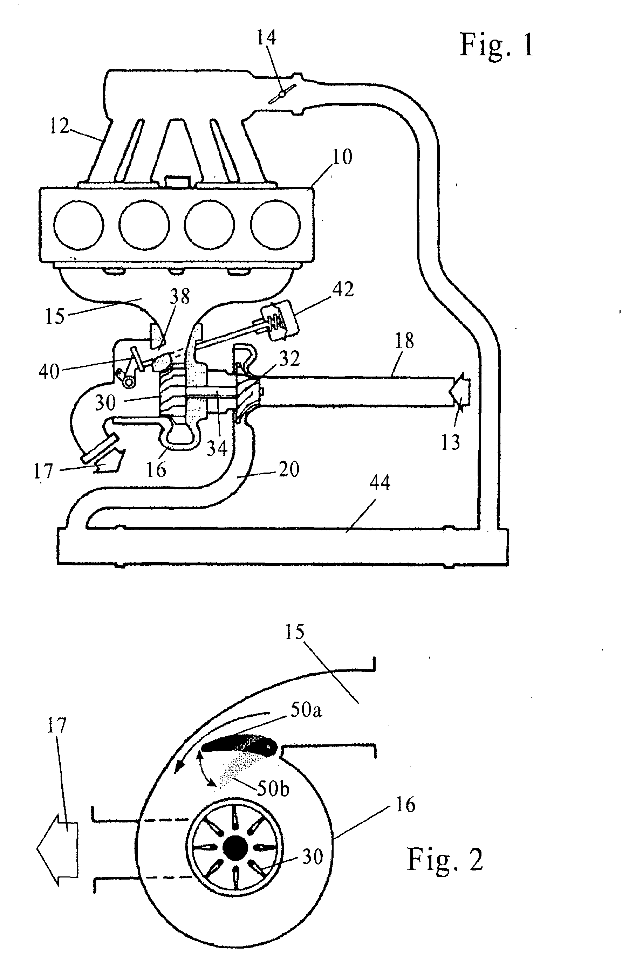

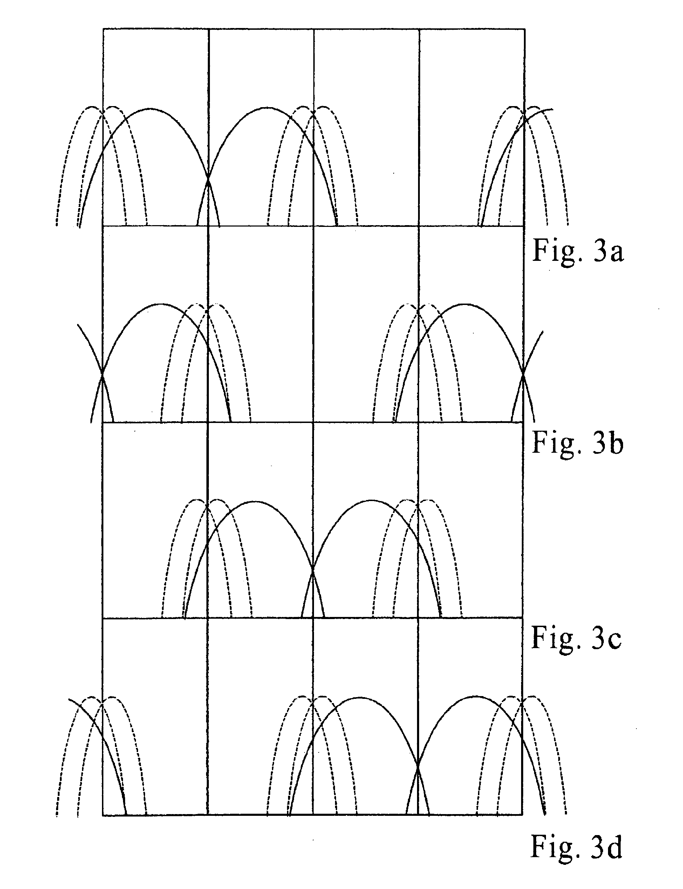

Figure 1 shows a dual-mode engine 10 having an intake manifold 12 and a main butterfly throttle 14. The engine may be one having switchable cams and/or followers as described for example in US Patent No. 5,158,044 or it may be a camless engine with hydraulic valve actuators as described in US Patent No. 5,517,951. The desired valve timing diagrams required for two- and four- stroke operation for the four cylinders of a four-cylinder engine are shown in Figures 3a to 3d respectively. In these figures, the valve events in solid lines are those required during four-stroke operation and those in dotted lines are those required for two-stroke operation. It will be noted that the essential difference is a doubling in frequency accompanied by a phase shift and a halving in event duration, all of which can be effected by a system using a fixed camshaft driven at different speeds as well as by camless systems which offer the additional advantage that the event duration and phasing can be altered at will. The phase shift referred to above is the result of the cross-over point between exhaust and intake events occurring around bottom dead centre in two-stroke mode and top dead centre in four-stroke mode. The person skilled in the art will appreciate that, when changing between operating modes, it may also be necessary to change other related parameters such as ignition and injection frequency and timings.

The engine has an exhaust manifold 15 which leads by way of an exhaust turbocharger 16 to the exhaust after-treatment system represented simply by an arrow 17. The exhaust gas flow drives a turbine blade 30 which is connected by way of a shaft 34 to an impeller 32 that acts to pressurise the air upstream of the main throttle 14. Ambient air is drawn in through the usual filter represented by an arrow 13 and flows through a pipe 18 to the compressor side of the turbocharger 16. The air pressurised by the impeller 32 flows by way of a conduit 20 to an intercooler 44 which reduces the temperature of the intake air before it is fed to intake manifold 12.

As above described the turbocharger configuration is conventional, though in the present invention the design of the turbocharger is not conventional for reasons discussed below. Such a configuration would conventionally be used to increase the power output of the engine by increasing the mass of charge trapped in the combustion chamber of the engine operating at high load.

In the present invention, the turbocharger 16 is intended to be used in two-stroke mode to increase exhaust back pressure and to act as a scavenging blower and it is designed to reach its maximum speed and boost pressure when operating under medium load conditions. As there is a danger of over-driving the turbine at higher loads, a wastegate is used to prevent the turbine from being damaged. The wastegate comprises a passage 38 that bypasses the turbine 30 and allows the exhaust gases to flow directly into the after-treatment system 17. The bypass passage 38 is opened and closed by means of a valve 40 which is in turn connected to an actuator 42 responsive to the turbine speed. When the turbine speed reaches its permissible maximum, the valve 40 is opened by the actuator 42, so that the mass of exhaust gases flowing over the turbine 30 is reduced.

Aside from the fact that the turbocharger is brought into operation under low and medium power operating conditions, the turbocharging used in the present invention differs from the prior art in that its purpose is not to increase engine maximum output power or simply to provide scavenging but to extend the range in which the engine can support controlled auto-ignition when operating in two-stroke mode.

In particular, in the present invention, the turbocharging is used during controlled auto-ignition in the two-stroke mode when a high proportion of residual gases is required to trigger auto-ignition of the fresh charge. The turbocharger impedes the scavenging process by increasing the exhaust back pressure at the same time as providing the necessary increase in intake pressure to force the fresh intake charge into the cylinder against the exhaust back pressure.

Because a large proportion of the residual gases is not discharged from the combustion chamber, the mass flow in the exhaust system during the controlled auto-ignition mode of operation of the engine is always low and would not be sufficient to drive a conventional turbocharger to its full speed. It is therefore necessary for the turbine 30 of the turbocharger 16 in the present invention to be designed such that it reaches its maximum speed during relatively low mass flows in the exhaust system. The impeller 32 must also be designed to achieve maximum boost for the reduced intake air flow when it is driven at this speed by the turbine. The overall effect of the turbocharger is to increase the back pressure and the boost pressure in proportion to one another and thereby allow a greater mass of combined charge to be admitted into the combustion chamber without interfering with the auto-ignition process. In other words, the power range within which controlled auto-ignition remains possible is extended.

The fact that the turbocharger 16 must be of special design to achieve the desired results during controlled auto-ignition means that when the engine reverts to four-stroke operation during high load, the increased mass flow in the exhaust system would risk an over-speed of the turbine and at the same time the impeller 32 would not be capable of building up the intake air pressure sufficiently when the volume flow demand from the engine is increased. Hence, the same turbocharger cannot be used without modification outside the controlled auto-ignition range.

Two possible solutions to this problem are envisaged. The first solution is to disable the turbocharger 16 when the engine is not operating in the controlled auto-ignition mode. The second solution is to use a variable geometry turbocharger of which the performance may be modified in dependence upon the prevailing operating conditions.

The first solution may use a variant of the arrangement shown in Figure 1. The turbine is designed to reach maximum speed with low mass flows and the maximum speed is limited by the use of a modified wastegate. In controlled auto-ignition mode, the wastegate will not be open but there will be no danger of the safe speed of the turbocharger being exceeded on account of the low mass flow in the exhaust system. When the engine is operating outside the auto-ignition range, however, the wastegate (controlled by a speed sensor) will open to bypass the turbine 30 so that the turbocharger is safeguarded from damage. At this time, the impeller 32 of the turbocharger 16 will not be able to sustain a significant boost to the intake pressure to meet the increased demand in air flow from the engine. Should it be required to increase the maximum output engine power, then a second differently designed turbocharger will be required to act in series with the turbocharger 16 that is illustrated.

The second solution, which uses a variable geometry turbocharger, is shown schematically in Figure 2. Here, the turbine side of the turbocharger 16 is shown with a deflector that can be moved between the position 50a and the position 50b to divert the gas flow and thereby allow the turbine to reach its maximum speed at different values of mass flow in the exhaust system, depending on the operating conditions of the engine. The geometry of the impeller side (not shown) of the turbocharger may also be variable to adapt the delivery rate in dependence upon the engine operating conditions so as always to be able to achieve the desired boost pressure in the intake system, regardless of mass flow.

Where the turbocharger has a variable geometry, it is possible to modify the turbine side not only when changing between modes but also when operating in two-stroke mode for effecting fine control of the exhaust back pressure to sustain controlled auto-ignition.

It is important to note that the engine in the present invention is always started in four-stroke mode. This ensures that the engine will start immediately when the intake system is not pressurised. Once the engine has started, the engine continues to run in four stroke mode until it warms up as auto-ignition cannot be achieved when the engine is cold. Even when the engine is warm, it is currently preferred (though not essential) to operate the engine in four-stroke mode and normal ignition when the engine is idling and during this time the pressure required for scavenging in two-stroke mode will have been developed in the intake system.

The engine is switched to two-stroke controlled auto-ignition operation for low and medium load operation. During this time, even running and low emissions are achieved by the controlled auto-ignition combustion while the two-stroke operation gives the advantage of high torque. It is possible to remain in two-stroke mode when the upper limit of the auto-ignition range is reached because in two-stroke operation a seamless transition can be achieved between auto-ignition and conventional ignition. As high load is approached, the engine is switched to four-stroke operation to ensure that it complies with emission requirements (thanks to its being possible to use a three-way catalytic converter). It is possible to modify the fuelling and/or timing during he transition between modes in order to avoid a sudden change in engine power which would affect drivability.

## Claims

1. An internal combustion engine (10) having exhaust and intake poppet valves having opening and closing events relative to the rotation of the engine crankshaft that are selectable such that the engine may be switched between a two-stroke mode and a four-stroke mode, **characterised in that** control means are provided to operate the engine in four-stroke mode under high load and starting operating conditions and in a two-stroke controlled auto-ignition mode under low and medium load operating conditions.

2. A dual-mode internal combustion engine as claimed in claim 1, wherein means (16) are provided in the exhaust system for increasing the exhaust back pressure in order to extend the range over which controlled auto-ignition occurs reliably in the two-stroke mode of operation.

3. A dual-mode internal combustion engine as claimed in claim 2, wherein an exhaust turbocharger (16) is provided to increase the exhaust back-pressure and to pressurise the intake charge.

4. A dual-mode internal combustion engine as claimed in claim 3, wherein the turbocharger (16) is designed to attain its maximum turbine speed and maximum boost while the engine is operating under medium loads.

5. A dual-mode internal combustion engine as claimed in claim 4, wherein means are provided to protect the turbocharger (16) from damage when the engine is operating under high load in four-stroke mode.

6. A dual-mode internal combustion engine as claimed in claim 5, wherein the means for protecting the turbocharger (16) from damage comprise means (38,40,42) for enabling the turbine of the turbocharger to be bypassed during high load operation.

7. A dual-mode internal combustion engine as claimed in claim 5, wherein the turbocharger has a variable geometry on the side of its turbine and/or impeller.

8. A dual-mode internal combustion engine as claimed in claim 7, wherein means are provided for fine tuning the geometry of the turbine side of the turbocharger to regulate the exhaust back-pressure when the engine is operating with controlled auto-ignition.

9. A dual-mode internal combustion engine as claimed in any preceding claim, wherein the engine is a compression ignition engine.

10. A dual-mode internal combustion engine as claimed in any of claims 1 to 8, wherein the engine is a spark ignition engine.

## Patentansprüche

1. Brennkraftmaschine (10) mit Auslaß- und Einlaß-Tellerventilen mit relativ zur Drehung der Motorkurbelwelle erfolgenden Öffnungs- und Schließereignissen, welche so wählbar sind, daß der Motor zwischen einer Zweitakt-Betriebsart und einer Viertakt-Betriebsart umschaltbar ist,
**dadurch gekennzeichnet, daß** Steuermittel vorgesehen sind, um den Motor unter hoher Last und Anlaßbetriebsbedingungen im Viertaktbetrieb zu betreiben, und unter niedrigen bis mittleren Lastbedingungen im Zweitaktbetrieb zu betreiben.

2. Brennkraftmaschine mit zwei Betriebsarten nach Anspruch 1, worin Mittel (16) im Auslaßsystem vorgesehen sind, um den Abgas-Rückstaudruck zu erhöhen, so daß der Bereich, in welchem im Zweitaktbetrieb eine kontrollierte Selbstzündung zuverlässig auftritt, erweitert wird.

3. Brennkraftmaschine mit zwei Betriebsarten nach Anspruch 2, worin ein Abgasturbolader (16) vorgesehen ist, um den Abgas-Rückstaudruck und den Druck der Einlaß-Charge zu erhöhen.

4. Brennkraftmaschine mit zwei Betriebsarten nach Anspruch 3, worin der Turbolader (16) so ausgelegt ist, daß er seine höchste Turbinendrehzahl und den höchsten Ladedruck erreicht, wenn der Motor unter mittleren Lasten arbeitet.

5. Brennkraftmaschine mit zwei Betriebsarten nach Anspruch 4, worin Mittel vorgesehen sind, um den Turbolader (16) vor Beschädigungen zu schützen, wenn der Motor unter hoher Last im Viertaktbetrieb arbeitet.

6. Brennkraftmaschine mit zwei Betriebsarten nach Anspruch 5, worin die Mittel zum Schutz des Turboladers (16) vor Beschädigungen Mittel (38, 40, 42) beinhalten, die eine Umgehung der Turbine des Turboladers während des Betriebes unter hoher Last erlauben.

7. Brennkraftmaschine mit zwei Betriebsarten nach Anspruch 5, worin der Turbolader eine verstellbare Geometrie auf der Seite der Turbine und/oder des Verdichterrades aufweist.

8. Brennkraftmaschine mit zwei Betriebsarten nach Anspruch 7, worin Mittel vorgesehen sind, um die Geometrie der Turbinenseite des Turboladers abstimmen zu können, so daß der Abgas-Rückstaudruck geregelt wird, wenn der Motor mit kontrollierter Selbstzündung arbeitet.

9. Brennkraftmaschine mit zwei Betriebsarten nach einem beliebigen der vorangehenden Ansprüche, worin der Motor ein Kompressionsdruck-Selbstzünder-Motor ist.

10. Brennkraftmaschine mit zwei Betriebsarten nach einem beliebigen der Ansprüche 1 bis 8, worin der Motor ein fremdgezündeter Motor ist.

## Revendications

1. Un moteur à combustion interne (10) possédant des distributeurs d'échappement et d'admission à clapet avec des séquences d'ouverture et de fermeture de cycle par rapport à la rotation du vilebrequin du moteur, qui sont sélectionnables de manière à ce que le moteur puisse être commuté entre un mode à deux temps et un mode à quatre temps, **caractérisé en ce que** des moyens de contrôle sont fournis pour opérer le moteur selon le mode à quatre temps sous des conditions de fonctionnement à charge élevée et de démarrage, et selon un mode à allumage automatique contrôlé à deux temps sous des conditions de fonctionnement à charge faible et moyenne.

2. Un moteur à combustion interne à double mode selon la revendication 1, dans lequel des moyens (16) sont fournis dans le système d'échappement pour augmenter la contre - pression de l'échappement, afin d'étendre la gamme au sein de laquelle un allumage automatique contrôlé survient de façon fiable, selon le mode de fonctionnement à deux temps.

3. Un moteur à combustion interne à double mode selon la revendication 2, dans lequel un turbocompresseur d'échappement (16) est fourni pour augmenter la contre - pression de l'échappement et pressuriser la charge d'admission.

4. Un moteur à combustion interne à double mode selon la revendication 3, dans lequel le turbocompresseur d'échappement (16) est conçu pour atteindre sa vitesse de turbine maximale et sa surpression maximale lorsque le moteur fonctionne sous des charges moyennes.

5. Un moteur à combustion interne à double mode selon la revendication 4, dans lequel des moyens sont fournis pour protéger le turbocompresseur (16) contre un endommagement lorsque le moteur fonctionne sous des charges élevées selon le mode à quatre temps.

6. Un moteur à combustion interne à double mode selon la revendication 5, dans lequel les moyens pour protéger le turbocompresseur (16) comprennent des moyens (38, 40, 42) pour permettre le contournement de la turbine du turbocompresseur pendant le fonctionnement sous des charges élevées.

7. Un moteur à combustion interne à double mode selon la revendication 5, dans lequel le turbocompresseur possède une géométrie variable sur le côté de sa turbine et/ou de sa roue à ailettes.

8. Un moteur à combustion interne à double mode selon la revendication 7, dans lequel des moyens sont fournis pour affiner le réglage de la géométrie du côté de la turbine du turbocompresseur, pour réguler la contre - pression de l'échappement lorsque le moteur fonctionne avec l'allumage automatique contrôlé.

9. Un moteur à combustion interne à double mode selon l'une des revendications précédentes, dans lequel le moteur est un moteur à allumage par compression.

10. Un moteur à combustion interne à double mode selon l'une des revendications 1 à 8, dans lequel le moteur est un moteur à allumage par étincelle.
